# EUROPEAN PATENT SPECIFICATION

(11) **EP 2 578 323 B1**
(45) Date of publication and mention of the grant of the patent: **30.10.2013**
(21) Application number: 12183899.9
(22) Date of filing: 11.09.2012
(51) Int. Cl.: B05D 3/12, B05D 5/06, A47J 27/00, A47J 36/02, B05D 5/08

(54) **A decoration process of cooking vessels with sol-gel coating.**
Dekorationsverfahren von Kochgefäßen mit Sol-Gel-Beschichtung.
Procédé de décoration de récipients de cuisson avec revêtement sol-gel.

(30) Priority: 07.10.2011 IT AN20110134
(43) Date of publication of application: 10.04.2013
(73) Proprietor: Alluflon S.p.A., 61100 Pesaro (IT)
(72) Inventor: Montagna, Michele, 61122 Pesaro (IT)
(74) Representative: Baldi, Claudio

(56) References cited:
- EP-A1- 2 450 469
- WO-A1-99/12662

## Description

The present patent application for industrial invention relates to a decoration process of cooking vessel with sol-gel coating and to the cooking vessel obtained with said process.

The application of a SOL-GEL coating on the inside and/or outside of a cooking vessel is a known technique and provides for a first surface preparation step of the area to be painted in order to guarantee the necessary roughness, a second coating application step and a third cooking step in oven in order to permanently fix said coating on the substrate where it is applied.

After drying completely, said coating shows the typical characteristics that are required for a surface adapted to come in contact with food: non-stick, thermal resistance, easy cleaning, resistance against abrasion and corrosion, etc.

However, the aforesaid intrinsic characteristics make it difficult to mark these surfaces.

The possibility to mark the internal/external surface indelibly with any type of information or simply a trademark and/or logo is impaired by some characteristics that are typical of said type of coating, such as non-stick, resistance against abrasion, hardness and fragility.

In fact, it must be noted that the traditional decoration techniques, such as silk-screen printing, pad printing or transfer cannot be applied because, after drying by means of suitable heaters to the so-called "touch-dry" condition (the coating is not affected when manipulated by the user), said coating is provided with non-stick characteristics such that anchoring of decoration is not guaranteed even if similar painting products are used.

Even more so, the aforesaid techniques cannot be applied on products where said coating has been permanently fixed with cooking.

On such a cooked coating, techniques such as micro-point marking or laser marking would be impossible to apply because of the intrinsic fragility of the film, which has the surface hardness of ceramic glaze.

WO99/12662 discloses a process for forming a patterned release coating on the surface of a frying pan, including the steps of spraying a mixture of magnetizable flakes in a liquid dispersion of fluoropolymer onto said surface, applying a magnetic force to reorient the flakes corresponding to the desired pattern and baking said coating.

EP2 450 469 in the name of the same applicant, discloses a manufacturing method of a non-stick cooking vessel including the step of applying a ceramic SOL-GEL coating in liquid form.

The purpose of the present invention is to devise a process to reproduce designs, trademarks or logos on cooking vessels with sol-gel coating.

Another purpose of the present invention is to devise a process that, in addition to achieve the aforesaid purpose, is able to reproduce designs, trademarks or logos with contrast colors with respect to the sol-gel coating that represents the internal and/or external base coating.

These and other purposes have been achieved by the process and the cooking vessel of the invention.

The novelty of the process of the invention consists in a sequence of operations that, when executed correctly, can solve the drawbacks of the prior marking techniques for cooking vessels.

The first step of the process according to the present invention consists in the application of the SOL-GEL coating on the internal and/or external surface of the cooking vessel according to the traditional system.

This step is followed by drying/cooking at a temperature comprised between 50° C and 200° C according to the type of logo to be obtained, position, size, color, etc.

The third step consists in the guided abrasion of the coating. Said step provides for mask/impression or CAD-driven laser beam marking, during which a surface layer of the coating is scraped off, carving the logo or decoration to be obtained on the cooking vessel.

Therefore, the film of surface coating that guarantees good non-stick properties is interrupted in correspondence of the marked logo.

According to the above, the logo/decoration will have the color of the base coating; contrast with background will be entrusted to the capability of the marking technique to make the logo more or less legible.

During the next step, the surface film of the coating is restored in the proximity of the marked area with one of the known techniques with silk-screen printing/pad printing or by spraying a SOL-GEL product compatible with the base coating, meaning that it can adhere and be fixed to the base coating.

The roughness of the marked surface must be restored because the non-stick properties of the coating are lost in the area with logo/decoration.

Then, the entire coating, including the surface area with logo/decoration, is finally dried in oven at a suitable temperature for a SOL-GEL type coating (from 180° C to 380° C).

In summary, the process provides for:
a) provision of a cooking vessel with external surface and internal surface adapted to come in contact with food to be cooked;
b) application of a sol-gel coating on the internal and/or external surface of said vessel;
c) heating of the applied coating at a temperature of at least 50° C, preferably 80±20 ° C;
d) abrasion of said coating by means of sand marking with mask or laser beam in order to reproduce the desired logo/design;
e) application (preferably by spraying) of sol-gel material compatible with base coating on abraded area (meaning that it can adhere and be fixed to the base coating);
f) cooking of said coating and logo with final passage in oven at a temperature of at least 180° C, preferably 200±20° C.

In order to obtain a logo/design with contrast color with respect to the sol/gel coating of the cooking vessel, the process provides that in step (c) the heating temperature of the applied coating is 180° C, preferably 200±20° C.

After such heating, the process provides for execution of step (d), whereas during step (e) the ink of SOL-GEL type compatible with the base coating has a different color with respect to the latter.

After finally fixing the coating with cooking (step f), any excess paint applied in the proximity of the logo can be removed with an additional step (g) during which the cooking vessel is cleaned by means of rubbing or water injection.

In this step the compatible sol-gel material deposited outside the marked area will be simply removed also with a water jet, since it has not adhered to the non-stick surface.

More precisely, in order to obtain a logo/design with contrast color with respect to the sol/gel coating, the process of the invention provides for:
a) provision of a cooking vessel with external surface and internal surface adapted to come in contact with food to be cooked;
b) application of a sol-gel coating on the internal and/or external surface of said vessel;
c) heating (preferably with oven cooking) of applied coating at a temperature of at least 180° C, preferably 200±20° C;
d) abrasion of said coating by means of sand marking with mask or laser beam in order to reproduce the desired logo/design;
e) application (preferably by spraying) of material compatible with base coating on abraded area, with color contrast with respect to the sol/gel coating;
f) cooking of coating and logo with final passage in oven at a temperature of at least 180° C, preferably 200 ± 20° C;
g) cleaning of vessel by means of rubbing or washing with water injection to eliminate excessive compatible material applied on non-stick surface.

## Claims

1. A decoration process of cooking vessels with sol-gel coating, **characterized by** the fact that it provides for:
a) provision of cooking vessel with external surface and internal surface adapted to come in contact with food to be cooked;
b) application of sol-gel base coating on internal and/or external surface of said vessel;
c) heating of applied base coating at temperature of at least 50° C;
d) abrasion of said base coating by means of sand marking with mask or laser beam in order to represent the desired logo/design;
e) application of a second coating layer on the abraded area of said base coating, wherein said second coating layer is a sol-gel material compatible with base coating (meaning that it is capable of adhering and fixing to base coating) and said second coating layer has a contrasting color with respect to the sol/gel base coating;
f) cooking of coating and logo with final passage in oven at temperature of at least 180° C, preferably 200 ± 20° C.

2. A process according to claim 1, **characterized by** the fact that step (c) provides for heating the applied base coating at temperature of 80 ± 20° C.

3. A process according to claim 1, **characterized by** the fact that:
- step (c) provides for heating the applied base coating at temperature higher than 180° C;

4. A process according to the preceding claim, **characterized by** the fact that step (c) provides for heating the applied base coating at temperature of 200±20° C.

5. A process according to claim 3 or 4, **characterized by** the fact that it provides for an additional step after last step (e) consisting in:
g) cleaning of vessel by means of rubbing or washing with water injection to eliminate excessive compatible material applied on non-stick surface.

6. A process according to any of the preceding claims, **characterized by** the fact that application of said second coating layer of compatible material provided in step (e) is carried out by means of spraying.

## Patentansprüche

1. Verfahren zur Dekoration von Kochbehältern, die mit einer Sol-Gel-Beschichtung versehen sind, **dadurch gekennzeichnet, dass** es Folgendes vorsieht:
a) Bereitstellen eines Kochbehälters mit einer Außenfläche und einer Innenfläche, die dazu bestimmt ist, mit den zu kochenden Speisen in Berührung zu kommen;
b) Auftragen einer Sol-Gel-Grundbeschichtung auf der Innen- und/oder Außenfläche des Behälters;
c) Erhitzen der aufgetragenen Grundbeschichtung auf eine Temperatur von mindestens 50°C;
d) Abtragen der Grundbeschichtung mittels Sandstrahlbeschriftung mit Schablone oder Laser-Beschriftung zum Anbringen des gewünschten Logos oder Dekors;
e) Auftragen einer zweiten Beschichtungsschicht auf den Bereich, in dem die Grundbeschichtung abgetragen wurde, wobei die zweite Beschichtungsschicht aus einem Sol-Gel-Material besteht, das mit der Grundbeschichtung kompatibel ist (in dem Sinne, dass es in der Lage ist, auf der Grundbeschichtung zu haften und fixiert zu bleiben) und die zweite Beschichtungsschicht eine mit der Sol-Gel-Grundbeschichtung kontrastierende Farbe besitzt;
f) Brennen der Beschichtung und des Logos mittels eines Abschlussbrands im Brennofen bei mindestens 180°C, vorzugsweise bei 200±20 °C.

2. Verfahren nach Anspruch 1, **dadurch gekennzeichnet, dass** die Phase (c) ein Erhitzen der aufgetragenen Grundbeschichtung auf eine Temperatur von 80±20 °C vorsieht.

3. Verfahren nach Anspruch 1, **dadurch gekennzeichnet, dass** die Phase (c) ein Erhitzen der aufgetragenen Grundbeschichtung auf eine Temperatur von über 180 °C vorsieht.

4. Verfahren nach dem vorstehenden Anspruch, **dadurch gekennzeichnet, dass** die Phase (c) ein Erhitzen der aufgetragenen Grundbeschichtung auf eine Temperatur von 200±20°C vorsieht.

5. Verfahren nach Anspruch 3 oder 4, **dadurch gekennzeichnet, dass** es eine weitere Phase nach der Phase (e) vorsieht, bestehend aus:
g) Reinigen des Behälters durch Abreiben oder mittels Wasserstrahl zur Beseitigung der Überschüsse des kompatiblen Materials, das auf der antihaftbeschichteten Fläche aufgetragen wurde.

6. Verfahren nach einem der vorstehenden Ansprüche, **dadurch gekennzeichnet, dass** das Auftragen der in der Phase (e) vorgesehenen zweiten Beschichtungsschicht mit kompatiblem Material durch Aufsprühen vorgenommen wird.

## Revendications

1. Processus pour la décoration de récipients de cuisson dotés de revêtement du type sol-gel **caractérisé en ce qu'**il prévoit :
a) de prédisposer un récipient de cuisson présentant une surface externe et une surface interne destinée à entrer en contact avec les aliments à cuire ;
b) d'appliquer un revêtement de base du type sol-gel sur la surface interne et/ou externe du dit récipient ;
c) de réchauffer le revêtement de base appliqué à une température d'au moins 50 °C ;
d) d'abraser ledit revêtement de base, à l'aide de marquage au sable ou rayon laser, aux fins de représenter le logo/dessin désiré ;
e) d'appliquer une seconde couche de revêtement sur la zone abrasée du dit revêtement de base, où ladite seconde couche est un matériau compatible du type sol-gel (dans le sens de pouvoir adhérer et se fixer sur le revêtement de base) et ladite seconde couche de revêtement ayant une couleur en contraste par rapport au revêtement de base du type sol-gel ;
f) de cuire le revêtement et le logo moyennant un passage final au four à une température d'au moins180 °C, préférablement à 200±20 °C.

2. Processus selon la revendication 1, **caractérisé en ce que** la phase (c) prévoit de réchauffer le revêtement de base appliqué à une température de 80±20 °C.

3. Processus selon la revendication 1, **caractérisé en ce que** la phase (c) prévoit de réchauffer le revêtement de base appliqué à une température supérieure à 180°C.

4. Processus selon la revendication précédente, **caractérisé en ce que** la phase (c) prévoit de réchauffer le revêtement de base appliqué à une température de 200±20 °C.

5. Processus selon les revendications 3 ou 4, **caractérisé en ce qu'**il prévoit une phase ultérieure après la phase (e) qui consiste en:
g) nettoyer par frottement ou lavage au jet d'eau le récipient aux fins d'éliminer l'excès de matériau compatible appliqué sur la surface anti-adhérente.

6. Processus selon l'une quelconque des revendications précédentes, **caractérisé en ce que** l'application de ladite seconde couche de revêtement de matériau compatible, prévue pendant la phase (e), s'effectue par giclement.
